(19) Europäisches Patentamt
European Patent Office
Office européen des brevets

(11) **EP 2 732 530 B1**

(12) **FASCICULE DE BREVET EUROPEEN**

(45) Date de publication et mention
de la délivrance du brevet:
**10.01.2018 Bulletin 2018/02**

(21) Numéro de dépôt: **12814423.5**

(22) Date de dépôt: **12.07.2012**

(51) Int Cl.:
*H02J 7/00* (2006.01)        *H02J 15/00* (2006.01)
*B60L 7/12* (2006.01)        *B60L 11/18* (2006.01)
*H02J 7/02* (2016.01)

(86) Numéro de dépôt international:
**PCT/CA2012/050479**

(87) Numéro de publication internationale:
**WO 2013/010270 (24.01.2013 Gazette 2013/04)**

(54) **SYSTÈME DE RECHARGE RAPIDE MULTI-NIVEAUX**

SCHNELLES MEHRSTUFIGES WIEDERAUFLADESYSTEM

RAPID MULTI-LEVEL RECHARGE SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.07.2011 CA 2746304**
**29.07.2011 CA 2747880**

(43) Date de publication de la demande:
**21.05.2014 Bulletin 2014/21**

(73) Titulaire: **Hydro-Québec**
**Montréal QC H2Z 1A4 (CA)**

(72) Inventeur: **BEAUREGARD, François**
**Boucherville, Québec J4B 2Y1 (CA)**

(74) Mandataire: **Cabinet Plasseraud**
**66, rue de la Chaussée d'Antin**
**75440 Paris Cedex 09 (FR)**

(56) Documents cités:
**JP-A- 4 281 334          JP-A- 5 111 171**
**JP-A- 11 113 185        JP-A- H04 281 334**
**JP-A- H05 111 171      JP-A- H11 113 185**
**US-A1- 2001 048 606    US-A1- 2001 048 606**
**US-A1- 2005 017 682    US-A1- 2005 017 682**

## Description

### DOMAINE DE L'INVENTION

L'invention porte en général sur un système de recharge, et plus particulièrement sur un système de recharge rapide multi-niveaux avec étages à convertisseur et de stockage interne imbriqués.

### ÉTAT DE LA TECHNIQUE

L'avènement nouveau de batteries de puissance, entre autres au Li-ion avec nanotitanate, présentant une très faible impédance interne, une très bonne résistance aux décharges profondes et une durée de vie de plusieurs dizaines de milliers de cycles, ouvre la porte à un besoin criant pour des chargeurs rapides. Il est maintenant possible de recharger un véhicule en 5 minutes. Par exemple, des autobus avec une quantité minimale de batteries embarquées peuvent rouler une vingtaine de kilomètres de façon autonome et se recharger en quelques minutes au terminus.

Un problème réside dans la réalisation économique d'un chargeur pouvant manipuler les niveaux de puissance requis par de telles vitesses de recharges. On parle de puissances de l'ordre de centaines de kilowatts voire de mégawatts dans le cas de trains ou d'autobus.

Non seulement le chargeur doit manipuler ces niveaux de puissances, mais en plus, les points de raccordements compatibles au réseau électrique sont limités ou coûteux. Dans le cas d'une station d'autobus, la puissance souscrite du réseau peut être établie en fonction de l'heure de pointe (qui correspond à la puissance maximale facturable), mais le reste du temps, la consommation peut être beaucoup moindre. Un cas extrême se situe dans une application résidentielle où le chargeur est destiné à être utilisé pour quelque 10 minutes par jour pour faire le plein d'un véhicule électrique e.g. à 100 kilowatts.

Il y a donc un besoin pour un chargeur très puissant et qui comporte un stockage interne destiné à niveler la puissance vue du réseau électrique.

Une solution classique consiste à utiliser un petit chargeur qui fonctionne sur de longues périodes, préférablement aux heures où la demande énergétique est faible, afin de stocker l'énergie dans une batterie intermédiaire locale, elle aussi de puissance. Lorsqu'un véhicule se raccorde pour une recharge rapide, un puissant convertisseur DC-DC est utilisé pour transférer un gros bloc d'énergie de la batterie intermédiaire vers celle du véhicule. Cette solution résout le problème du facteur d'utilisation, mais requiert toujours un convertisseur de taille.

De plus, la batterie intermédiaire requiert un système d'équilibrage de la charge entre les diverses cellules et modules qui la constituent. Ce système rajoute aux coûts voire même aux pertes énergétiques de l'ensemble.

Ensuite, la prolifération des chargeurs avec électronique de puissance risque de détériorer la qualité de l'onde électrique du réseau. Les harmoniques et les interférences générés par des formes d'ondes découpées en sont les principaux responsables. Les normes sur les appareils de ce type ne peuvent qu'évoluer en resserrant les critères d'émissions électromagnétiques. Il y a donc un besoin pour l'amélioration de la qualité de l'onde de courant de tels chargeurs.

Pour ce faire, les convertisseurs de puissance à facteur de puissance unitaire avec modulation "sinusoidal pulse width modulation" ("sinusoidal PWM" ou SPWM) constituent une solution techniquement attrayante quoique des fréquences de modulation élevées doivent être utilisées, ce qui entraîne des pertes de commutation. Une variante multi-niveaux de tension permet de réduire la fréquence de commutation tout en préservant la qualité de l'onde.

Cependant, la fourniture et le maintient de tensions continues à plusieurs niveaux du côté DC pose des problèmes de commande et/ou de complexité.

Finalement, il existe une demande croissante pour que des appareils raccordés au réseau puissent lui apporter assistance dans certaines circonstances. Que ce soit pour du nivellement de puissance (i.e. contribuer jusqu'à un certain point à fournir de la puissance en période de pointe), du support de tension par fourniture de puissance réactive ou même du filtrage d'harmonique. Donc un chargeur qui pourrait satisfaire ces besoins constitue un avantage.

On connaît notamment le document JPH11113185 qui décrit un arrangement à étages formé uniquement de batteries en série en condition d'échanger de l'énergie avec un moteur électrique et des chargeurs en parallèle servant à charger les batteries. Cet arrangement ne permet pas un contrôle multi-niveaux de la contribution des étages qui permet de réduire la taille des convertisseurs.

On connaît également le document JPH05111171 qui décrit un dispositif pour le chargement et le stockage rapide d'une batterie. La batterie intermédiaire comprise dans ce dispositif se décharge de façon incontrôlée dans la batterie, ce qui n'est pas souhaitable.

Le document US2001/048606 décrit une alimentation en courant continu mettant en oeuvre un schéma d'équilibrage de puissance de convertisseurs, et non de batteries, permettant de fonctionner à partir de plages de tensions en entrée. Ce document implique une configuration plus compliquée que celle mise en oeuvre dans la présente invention. Ce système n'utilise pas une batterie de puissance intermédiaire.

Le document US2005/017682 décrit un système autonome d'équilibrage de batteries avec surveillance de tension intégrée pour un transfert bilatéral d'énergie entre les batteries. Ce système n'utilise pas une batterie de puissance intermédiaire non plus.

## SOMMAIRE

Un objet de l'invention est de proposer un système de recharge rapide multi-niveaux avec étages de stockage intermédiaire et de transfert d'énergie imbriqués.

Un autre objet de l'invention est de proposer un tel système de recharge rapide qui peut être très puissant et qui peut niveler la puissance vue du réseau électrique.

Un autre objet de l'invention est de proposer un tel système de recharge rapide qui peut utiliser un convertisseur de taille réduite.

Un autre objet de l'invention est de proposer un tel système de recharge rapide qui peut permettre d'améliorer la qualité de l'onde de courant de tels types de systèmes ou chargeurs.

Un autre objet de l'invention est de proposer un tel système de recharge rapide qui peut servir d'appareil raccordé au réseau apte à lui apporter assistance dans certaines circonstances.

Selon un aspect de l'invention, il est proposé un système de recharge rapide multi-niveaux pour échanger de l'énergie avec un dispositif électrique de puissance selon la revendication indépendante 1.

L'invention est définie par les caractéristiques de la revendication indépendante 1. Les modes de réalisations préférés sont définis par les revendications dépendantes.

De manière non limitative, le système de recharge rapide selon l'invention peut être utilisé pour la recharge rapide de véhicules électriques incluant voitures, autobus, trains, métros, tramways et trolleybus. Il peut être utilisé dans des stations de recharge publiques (stations service) ou résidentielles. Il peut être utilisé pour le stockage local pour freinage régénératif de métro ou de train DC entrant en station. Il peut jouer un rôle pour l'assistance du réseau d'alimentation électrique pour la gestion de charge, le nivellement de pointe de charge et la compensation de puissance réactive ou des harmoniques. Il peut permettre la gestion intégrée de l'équilibrage des cellules de batteries.

## DESCRIPTION BRÈVE DES DESSINS

Une description détaillée des réalisations préférées de l'invention sera donnée ci-après en référence avec les dessins suivants:

Figure 1 est un diagramme schématique montrant que dans un chargeur classique, le convertisseur de sortie doit être dimensionné pour porter la totalité de la puissance.

Figure 2 est un diagramme schématique illustrant l'utilisation d'une batterie de puissance intermédiaire permettant une commande d'un grand flux de puissance avec seulement un petit convertisseur, un chargeur lent permettant à long terme un maintient de la charge de la batterie de puissance intermédiaire.

Figure 3 est un diagramme schématique illustrant que, afin de mieux gérer l'équilibrage des niveaux de charge d'une batterie intermédiaire, la batterie intermédiaire peut être subdivisée en modules possédant chacun son chargeur lent.

Figure 4 est un diagramme schématique montrant une réalisation où une opération non simultanée de chargeurs lents, d'une part, et de convertisseurs de sortie, d'autre part, permet d'éviter d'avoir recours à des transformateurs d'isolation par rapport au réseau électrique.

Figure 5 est un diagramme schématique illustrant que des modules de contacteurs sont utilisés pour présélectionner un niveau de tension fixe plus favorable pour les convertisseurs de sortie.

Figure 6 est un diagramme schématique montrant graphiquement une stratégie d'opération conjointe des contacteurs et des convertisseurs.

Figure 7 est un diagramme schématique montrant une adaptation triphasée avec mise en série des tensions de sortie des modules associés à chacune des phases.

Figure 8 est un diagramme schématique semblable à la Figure 7, mais avec mise en parallèle.

Figure 9A est un diagramme schématique détaillant un module convertisseur deux quadrants utilisé comme convertisseur de puissance.

Figure 9B est un diagramme schématique détaillant un module de contacteur.

Figure 10 est un diagramme schématique détaillant un module de convertisseur de tension quatre quadrants.

Figure 11 est un diagramme schématique montrant un système pour un équilibrage individuel des cellules d'un module de batterie intermédiaire.

Figure 12 est un diagramme schématique montrant une mise en contexte d'un système de recharge rapide multi-niveaux et de points de mesure utilisés pour sa commande.

Figure 13 est un diagramme schématique montrant une régulation en boucle fermée du courant instantané en agissant sur des modules individuels.

Figure 14 est un diagramme schématique montrant un exemple de contrôleur de haut niveau pour générer une consigne de courant instantané.

Figure 15 est un diagramme schématique montrant un exemple d'agencement de plusieurs chargeurs pour constituer une station-service

Figure 16 est un diagramme schématique montrant une réalisation du système de recharge rapide avec des chargeurs reliés par un bus parallèle.

Figure 17 est un diagramme schématique montrant une réalisation du système de recharge rapide avec des chargeurs reliés par une boucle série.

Figure 18 est un diagramme schématique montrant une réalisation du système de recharge rapide avec des étages à convertisseur et de stockage interne d'énergie pouvant servir au stockage et à la restitution d'énergie avec un dispositif électrique de puissance.

## DESCRIPTION DÉTAILLÉE DES RÉALISATIONS PRÉFÉRÉES

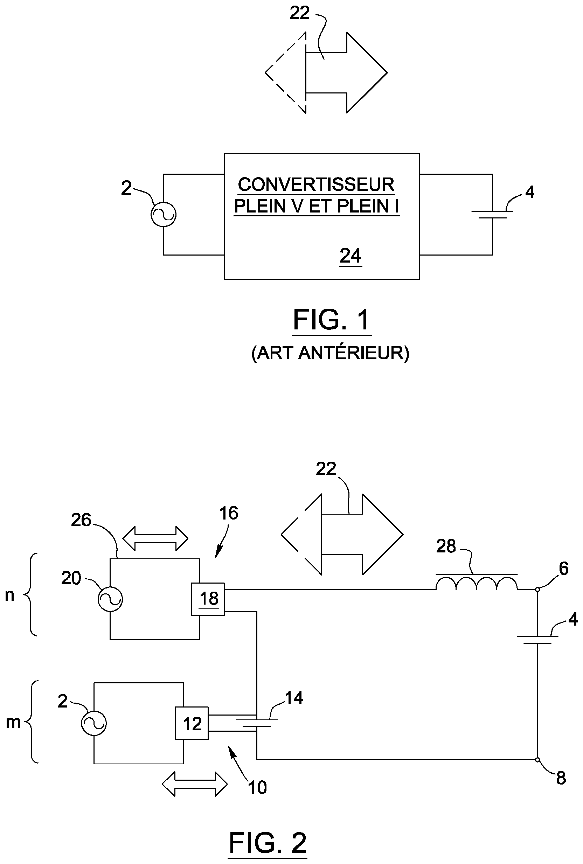

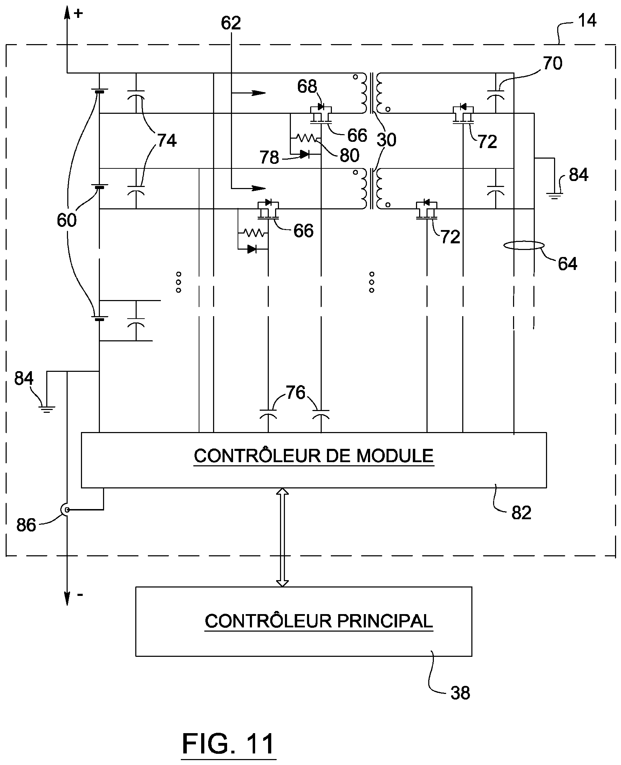

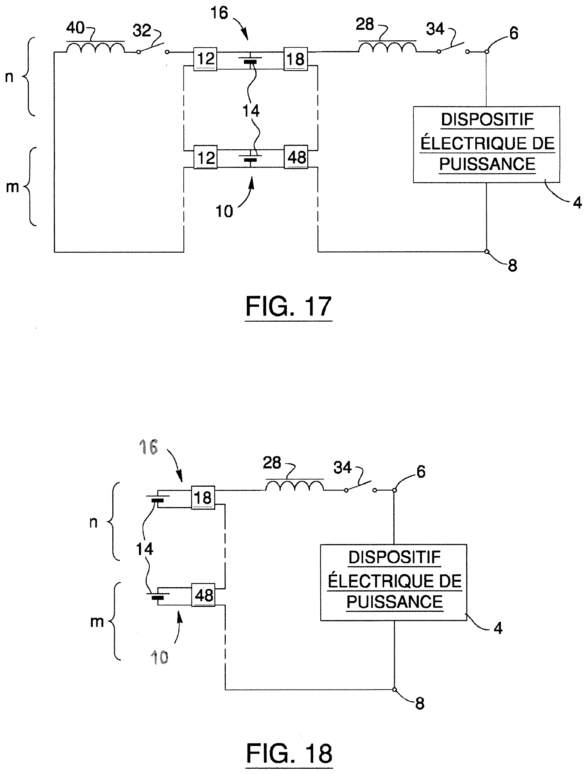

En référence à la Figure 2, il est montré un système de recharge rapide multi-niveaux pour échanger de l'énergie avec un dispositif électrique de puissance 4 comme une batterie de puissance d'un véhicule électrique dans le cas illustré dans la Figure 2. Le système de recharge rapide a des bornes de connexion 6, 8 avec le dispositif électrique de puissance 4. Un nombre n d'étages à convertisseur 16 et un nombre m d'étages de stockage interne d'énergie 10 sont connectés en série entre les bornes de connexion 6, 8, avec $n \geq 1$, $m \geq 0$ et $n+m \geq 2$. Chaque étage à convertisseur 16 a un convertisseur de puissance 18 couplé à un arrangement ayant un module de batterie de puissance intermédiaire 14 (comme illustré e.g. à la Figure 18) et/ou une connexion 26 à une source d'alimentation électrique 20 connectée ou non à un réseau électrique 2 dans le cas illustré dans la Figure 2. Chaque étage de stockage interne d'énergie 10 a un module de batterie de puissance intermédiaire 14. Chaque module de batterie de puissance intermédiaire 14 est caractérisé par une tension à vide élevée par rapport à des chutes de tension dues à des impédances internes (non illustrées) du module de batterie de puissance intermédiaire 14. En étant caractérisée ainsi, les modules de batterie de puissance intermédiaire 14 permettent de réduire le calibre en tension des étages à convertisseur 16 (qui servent à un ajustement continu) ou leur nombre, ce qui permet de réduire les coûts. Le module de batterie de puissance intermédiaire 14 de chaque étage de stockage interne d'énergie 10 et le convertisseur de puissance 18 de chaque étage à convertisseur 16 sont connectés ensemble de manière à être en condition d'échanger de l'énergie avec le dispositif électrique de puissance 4. Une unité de contrôle 38 (illustrée à la Figure 11) contrôle une contribution de chaque étage à convertisseur 16 et, le cas échéant, de chaque étage de stockage interne d'énergie 10 pour échanger de l'énergie avec le dispositif électrique de puissance 4.

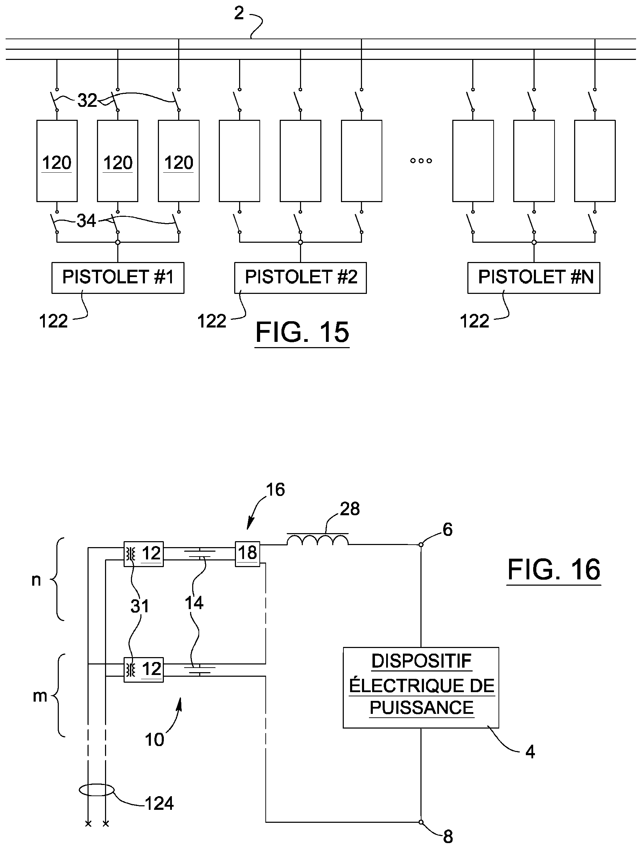

Le système de recharge rapide multi-niveaux peut prendre plusieurs configurations selon qu'il est destiné à des applications impliquant un réseau électrique 2 et une batterie de puissance comme dispositif électrique de puissance 4 (comme illustré dans les Figures 2, 3, 4, 5, 7, 8 et 15), ou des applications de stockage et de restitution d'énergie comme dans le cas d'un rail de métro comme dispositif électrique de puissance 4 (comme illustré dans les Figures 16, 17 et 18),

L'unité de contrôle 38 peut prendre la forme d'un microcontrôleur, ordinateur, circuit intégré, etc., avec processeur(s) ou unité(s) de traitement, mémoire(s) et interface(s) de contrôle pouvant être connectée(s) aux différents composants à contrôler ou générant des mesures dans le système, et configurable par programmation ou autre façon appropriée aux paramètres et modes d'opération voulus du système.

Le nombre m d'étages de stockage interne d'énergie 10 peut être nul lorsque deux étages à convertisseur 16 ou plus sont utilisés et qu'ils incluent un module de batterie de puissance 14 et optionnellement un chargeur 12 relié ou non à une source d'alimentation 20 (ou 2).

Le système de recharge rapide multi-niveaux selon l'invention présente une solution au problème de la taille d'un convertisseur en utilisant une batterie de puissance intermédiaire formée d'au moins un module de batterie 14 comme point d'appui de tension de sorte qu'un convertisseur 18 possédant une fraction de la tension de sortie puisse commander la totalité du transit de puissance 22 vers (ou de) la batterie e.g. d'un véhicule électrique ou autre dispositif électrique de puissance 4.

En référence à la Figure 1, il est montré une situation classique où un convertisseur 24 doit être dimensionné pour la pleine puissance 22 qui doit être transitée entre un réseau d'alimentation 2 et une batterie 4 e.g. d'un véhicule électrique. Cela nécessite une taille particulièrement élevée de convertisseur.

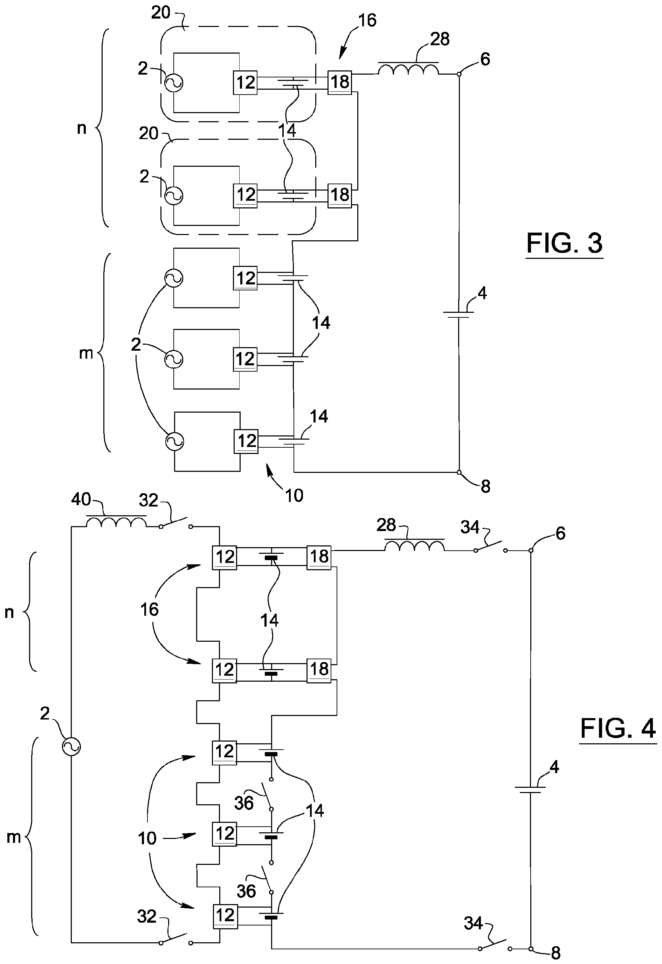

En référence à nouveau à la Figure 2, un petit chargeur 12 permet une recharge lente d'un module de batterie 14. Le problème du facteur d'utilisation se trouve ainsi résolu. Comme la batterie de puissance intermédiaire 14 peut atteindre plusieurs centaines de volts, plusieurs étages formés de modules de batterie de puissance 14 sont de préférence utilisés tel qu'illustré à la Figure 3. Il est donc possible de considérer le scindement du chargeur 12 en une pluralité de chargeurs 12 plus petits associés aux modules de batterie 14 respectifs des étages comme illustré à la Figure 3. Ce scindement permet de résoudre en bonne partie le problème de la gestion de l'équilibre de charge des modules de batterie 14 puisque les chargeurs 12 peuvent être commandés de façon à varier séparément la contribution de chaque étage.

Le coût des modules de batterie 14 est susceptible d'être en bonne partie absorbé par les économies de facturation sur la puissance souscrite et, dans bien des cas, par les économies sur la taille du ou des convertisseurs de puissance 18 impliqués dans le transfert d'énergie avec le dispositif électrique de puissance 4.

De plus, comme une pluralité d'éléments en série est utilisée, il est possible de profiter de ce fait pour implanter une stratégie de PWM ("Pulse Width Modulation") multi-niveaux au niveau des chargeurs 12. En effet, comme les modules de batterie de puissance 14 possèdent une très faible impédance et une tension pratiquement constante pour des niveaux de charge allant typiquement mais non limitativement de 5 à 95%, elles sont assimilables à des sources de tension idéales, simplifiant ainsi la topologie et la commande du système multi-niveaux obtenu. On peut ainsi avantageusement augmenter la qualité de l'onde du côté réseau 2.

La capacité du système multi-niveaux selon l'invention de générer des formes d'onde SPWM ("Sinusoidal Pulse Width Modulation") présentées au réseau 2 permet ainsi de fournir des services d'assistance au réseau 2 comme mentionnés précédemment.

Des réalisations du système de recharge rapide multi-niveaux dans lesquelles le ou les chargeurs lents 12 ou les étages 10, 16 peuvent ne pas être raccordés à un réseau 2, comme illustrées dans les Figures 16, 17 et 18, peuvent servir à récupérer et à restituer une énergie de freinage lorsqu'un train DC ou un métro entre en station. Le ou les chargeurs 12 peuvent ainsi ne servir qu'à l'équilibrage de la charge des étages 10, 16. Le freinage régénératif fonctionne indépendamment du fait que le ou les chargeurs 12 soient reliés au réseau 2. Dans ce genre de réalisations, le dispositif électrique de puissance 4 peut être formé par une charge à tension contre-électromotrice relativement fixe et à faible impédance par opposition à une charge résistive. On dira ici une charge de type tension ou simplement une charge de tension. Ce peut être des rails reliés à un réseau d'alimentation DC d'un métro ou une caténaire de train.

L'invention s'appuie sur le fait que le dispositif électrique de puissance 4 (e.g. une batterie d'un véhicule électrique) et le ou les modules de batterie 14 possèdent une tension à vide élevée par rapport aux chutes de tensions dues aux impédances internes. Le convertisseur 18 peut, avec une petite tension, provoquer une circulation de courants élevés en autant qu'il puisse compenser des écarts de tension entre le dispositif électrique de puissance 4 et le ou les modules de batterie 14 plus les chutes de tensions de leurs impédances internes. Le courant, et par conséquent la puissance, peut être commandé dans les 2 sens avec un convertisseur de puissance 18 ayant une configuration pour opérer dans deux quadrants et pouvant porter la totalité du courant.

Une inductance 28 connectée entre la borne de connexion 6 et le convertisseur de puissance 18 de l'étage à convertisseur 16 permet de lisser le courant et surtout d'éviter des impulsions de courant en absorbant des différences instantanées de tension dans le cas avantageux où le convertisseur de puissance 18 est constitué d'un demi-pont de type source tension (VSC ou "Voltage Source Converter").

La source d'alimentation électrique 20 peut provenir du réseau électrique 2, mais aussi d'un module de batterie intermédiaire 14 supplémentaire qui peut être couplé, lui aussi, à un chargeur lent 12 se couplant au réseau électrique 2 tel qu'illustré à la Figure 3.

Le (ou les) chargeur 12 peut aussi bien être unidirectionnel que bidirectionnel. Dans le second cas, il peut contribuer activement à supporter le réseau électrique 2 par exemple pendant une pointe. Si unidirectionnel, l'assistance au réseau électrique 2 demeure possible à un certain point, par exemple en limitant la consommation aux heures de pointe.

Selon la configuration du système de recharge rapide multi-niveaux, le (ou les) chargeur 12 comporte un étage d'isolation tel un transformateur 31 (comme illustré par exemple à la Figure 16) pour assurer un référencement approprié des tensions de chaque étage 10 (et 16 le cas échéant). D'autres configurations décrites plus loin peuvent se passer d'une telle isolation, ce qui constitue une réduction du nombre de composants, des coûts et aussi des pertes.

En référence à la Figure 3, il est montré comment plusieurs des étages 10, 16 peuvent être mis en série. Les modules de batterie 14 des étages de stockage interne 10 sont connectés en série avec les convertisseurs de puissance 18 des étages de conversion 16. Dans la réalisation illustrée, les alimentations des étages 16 sont elles-mêmes constituées de modules de batterie 14 et de chargeurs lents 12. Ainsi, tous les étages 10, 16 comportent un chargeur 12. Si les chargeurs 12 sont bidirectionnels, l'équilibrage de la charge des étages 10,, 16 peut aussi être bonifié car un module de batterie 14 dont un niveau de charge est plus élevé peut maintenant donner un peu d'énergie aux autres étages 10, 16. Dans le cas unidirectionnel, il est tout de même possible de moduler séparément la puissance de charge des chargeurs 12, par exemple par l'entremise de l'unité de contrôle 38 (tel qu'illustré à la Figure 11) configuré pour avoir un mode d'opération en conséquence.

En référence à la Figure 4, il est montré une réalisation où une utilisation de modules de contacteurs 32, 34 permet de se passer de transformateurs d'isolation dans les chargeurs 12. Les chargeurs 12 comportent uniquement une partie VSC. Dans cette réalisation, la recharge lente des modules de batterie 14 n'a pas lieu en même temps que des échanges avec la batterie de puissance formant le dispositif électrique de puissance 4. Il s'agit d'un inconvénient mineur étant donné que la recharge rapide de la batterie de puissance 4 ne prend que quelques minutes par rapport aux heures requises (imposées par le réseau 2) pour charger les modules de batterie 14. Pour la recharge lente des modules de batterie 14, les modules de contacteurs 32 sont fermés et les modules de contacteurs 34, 36 sont ouverts. Pour la recharge rapide de la batterie de puissance 4, c'est l'inverse. Par sécurité, un "interlock" préférablement mécanique empêche la fermeture simultanée des modules de contacteurs 32 avec les modules de contacteurs 34, 36.

Ce mécanisme de modules de contacteurs 32, 34, 36 avec "interlock" permet de raccorder en série tant les convertisseurs 18 et modules de batterie 14 (via les modules de contacteurs 36) des étages du côté charge rapide (vers la batterie cible 4) que les chargeurs 12 des étages du côté réseau 2 puisque le problème de référencement multiple de tensions est éliminé. Plusieurs avantages en découlent.

Des tensions élevées tant du côté réseau 2 que du côté véhicule (ou autre dispositif) peuvent être obtenues facilement, car il n'y a plus de transformateur d'isolation qui doive porter un cumul des tensions d'étage.

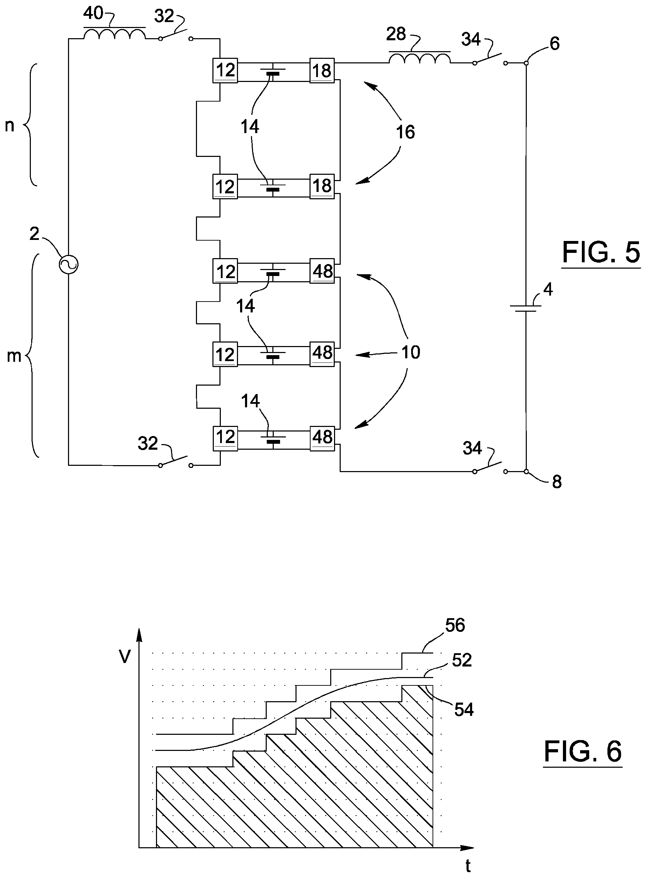

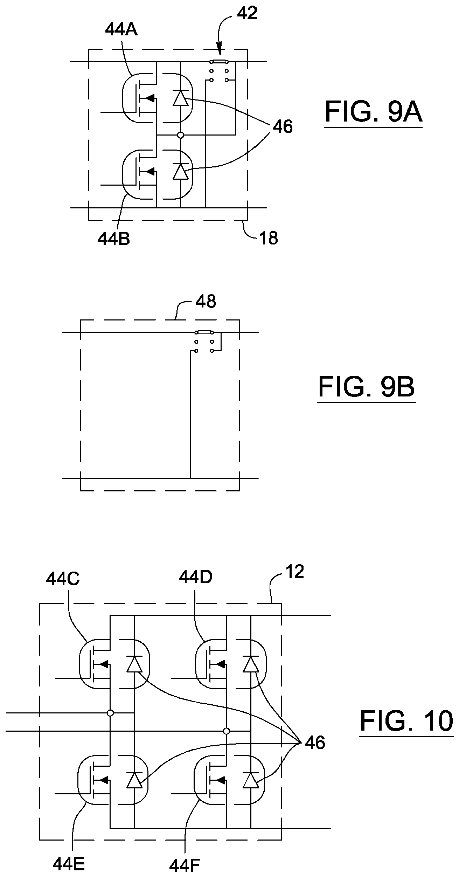

Les convertisseurs formés par les chargeurs 12 et les convertisseurs 18 se réduisent à leur plus simple expression, soit respectivement un pont de VSC tel qu'illustré à la Figure 10 et un demi-pont de VSC tel qu'illustré à la Figure 9A, sans transformateur ni inductance autre que les inductances 28 et 40 qu'ils partagent collectivement. Les pertes par transformation s'en trouvent éliminées. Les convertisseurs 18 peuvent être optionnellement munis de modules de contacteurs 42 comme montré à la Figure 9A pour les contourner lorsqu'ils ne sont pas requis et ainsi réduire les pertes. Des modules de contacteurs 48 comme montré à la Figure 9B peuvent remplacer les modules de contacteurs 36 comme illustré à la Figure 5, permettant non seulement une isolation pendant l'opération des chargeurs 12 mais en plus un contournement d'un étage 10 pendant un transfert avec la batterie de puissance 4.

Comme chaque étage 10, 16 se voit garantir sa tension individuelle par son module de batterie 14 associé, les semi-conducteurs 44A, 44B, 44C, 44D, 44E, 44F (tel que montrés dans les Figures 9A et 10) utilisés dans les convertisseurs 12 et 18 peuvent être de type basse tension. En particulier, si des MOSFETs sont utilisés, il devient possible d'en choisir à très basse résistance drain-source réduisant drastiquement les pertes. En plus, les MOSFETs sont munis d'une diode antiparallèle 46 intrinsèque qui évite d'en rajouter une externe. L'efficacité peut être augmentée encore plus en opérant les MOSFETs en redresseurs synchrones, i.e. que chaque MOSFET est maintenu à "ON" pendant la majorité du temps que le courant circule en inverse, afin de s'affranchir de la chute de tension de jonction de la diode antiparallèle 46.

Un autre avantage de la mise en série vient du fait que le côté réseau 2 bénéficie d'une multitude de niveaux de tension maintenant disponible pour du SPWM multi-niveaux. Les pertes de commutation sont réduites puisqu'une fréquence de modulation plus faible peut être utilisée. Cela permet aussi de réduire la taille de l'inductance 40 dans le cas où elle serait requise, avec ses coûts et ses pertes. L'inductance 40 peut être constituée de l'inductance équivalente du réseau 2.

Le SPWM permet des fonctions de support au réseau 2 et de travailler à facteur de puissance unitaire.

Des niveaux de puissance apparente appréciables du ou vers le réseau 2 peuvent être manipulés à coût avantageux.

En référence à la Figure 5, il est montré une réalisation préférentielle où des modules de contacteurs 48 (montrés aussi à la Figure 9B) permettent de présélectionner une valeur de la tension fixe fournie par les étages de stockage interne d'énergie 10. En rapprochant la valeur de tension fixe le plus possible de celle de la batterie 4, le nombre requis d'étages 16 munis de convertisseurs 18 peut être réduit.

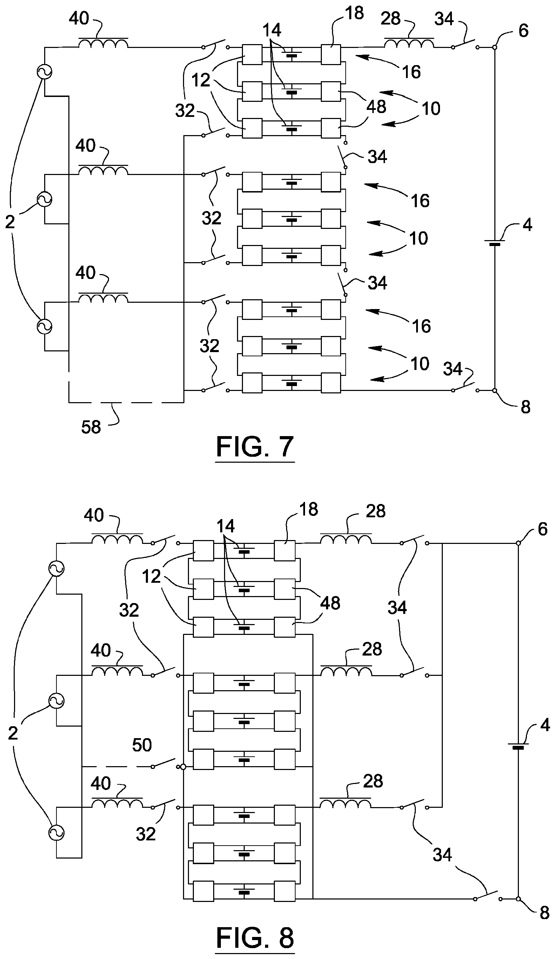

Pour réduire les coûts et augmenter la longévité des modules de contacteurs, les convertisseurs 18 et les chargeurs 12 configurés en VSC peuvent être utilisés pour réduire les courants à zéro avant toute manoeuvre des modules de contacteurs 32, 34, 36 (montré à la Figure 4), 42 (montré à la Figure 9A), 48 (montré à la Figure 9B) et 50 (montré à la Figure 8). De même, les convertisseurs 18 et les modules de contacteurs 48 peuvent être utilisés pour que la tension à vide du système de recharge rapide égale pratiquement celle de la batterie 4 avant toute fermeture des modules de contacteurs 34. Les chargeurs 12 configurés en VSC dans les étages 10 et 16 peuvent être utilisés pour que la tension AC totale de ces chargeurs en série vaille approximativement la tension instantanée du réseau 2 avant toute fermeture des modules de contacteurs 32.

Pour gérer plus facilement une répartition de charge entre les modules de batterie de puissance 14, un nombre plus grand que nécessaire d'étages 16 munis de convertisseurs 18 peut être incorporé dans le système. La sélection du nombre minimal de convertisseurs 18 requis à un instant donné peut être établie par les modules de contacteurs 42 tel que montré à la Figure 9A, selon qu'ils sont réglés en position de contournement ou non. Les convertisseurs 18 en position de contournement peuvent être isolés et shuntés par leurs modules de contacteurs 42, réduisant les pertes par conduction.

En référence à la Figure 6, il est montré qu'avec un minimum de deux niveaux actifs (convertisseurs 18 non shuntés par un module de contacteur 42 tel que montré à la Figure 9A), une marge de tension rapidement ajustable est préservée en tout temps. Dans la Figure 6, la courbe 52 représente la tension désirée, la courbe 54 représente la tension des étages fixes 10, et la courbe 56 représente la tension discrétisée maximale obtenue avec les niveaux actifs des étages 10 et 16. La plage entre les courbes 54 et 56 représente les valeurs de tension dynamiquement accessibles par PWM. Cette marge permet de garder un contrôle du courant afin d'éviter un emballement. Néanmoins, pour parer à une telle éventualité, un recours à des dispositifs de protection classiques (non illustrés) par fusible ou disjoncteur est préconisé.

En référence aux Figures 7 et 8, il est montré des adaptations triphasées d'un système tel que celui de la Figure 5. Ces adaptations permettent des niveaux de puissance plus importants mieux adaptés à des stations services pour véhicules électriques ou stations de recharge pour autobus électriques. Les Figures 7 et 8 illustrent respectivement des mises en série et en parallèles de groupes d'étages de sortie 10, 16. Dans le cas de groupes parallèles (Figure 8), qui comprennent aussi des étages 10, 16 en série au sein d'un même groupe, moins de modules de contacteurs 32 sont requis. Un module de contacteur 50 (Figure 8) ou un cavalier 58 (Figure 7) peut être requis selon les régimes de mise à la terre en vigueur.

En référence à la Figure 11, les modules de batterie de puissance 14 peuvent être constitués de plusieurs cellules élémentaires 60 en série, combinées à un système d'équilibrage et de gestion. L'équilibrage fin entre cellules 60 d'un même module de batterie 14 peut être essentiellement assuré par de petits convertisseurs "flyback" bidirectionnels 62 destinés à transférer sur une longue période une succession de petites charges des cellules 60 plus chargées vers les moins chargées. Il sera montré plus loin comment des puissances d'équilibrage plus importantes entre les modules de batterie 14 peuvent être obtenues via les chargeurs-convertisseurs 12, les convertisseurs 18 et les modules de contacteurs 48 (montrés par exemple à la Figure 5).

L'équilibrage fin peut se faire par intervention sur chacune des cellules en série. Comme l'ensemble des modules de batterie 14 peut être constitué de centaines de cellules 60 au total, il est avantageux de réduire la quantité et la taille des éléments, lesquels ont un impact sur le coût. La technique des petits "flybacks" bidirectionnels 62 convient avantageusement à ce sujet.

Un transfert d'énergie peut s'effectuer via un bus 64 propre à chacun des modules de batterie 14. Le bus 64 peut être prolongé de façon à couvrir plusieurs modules de batterie 14 si voulu, bien que cela puisse être moins pratique par exemple pour les considérations d'isolation des transformateurs 30. Pour transférer un petit bloc d'énergie d'une cellule 60 vers le bus 64, il suffit de faire conduire le MOSFET 66 correspondant à la cellule 60 pour bâtir un flux dans le noyau du transformateur 30 correspondant et de couper le courant avant d'atteindre la saturation. À la coupure, la diode intrinsèque 68 du MOSFET 72 correspondant se mettra à conduire et le flux retombera à zéro en rechargeant les condensateurs 70 du bus commun 64. Un transfert en sens inverse est aussi possible en intervertissant le rôle des MOSFETs 66 et 72. Donc, une impulsion sur la grille d'un MOSFET 66 transfère un bloc d'énergie vers le bus 64 alors qu'une impulsion sur la grille d'un MOSFET 72 transfère un bloc d'énergie vers la cellule 60 correspondante. Préférablement, les MOSFETS 66, 72 sont aussi activés lors des périodes correspondant à la conduction de leur diode intrinsèque 68 respective afin de réduire les pertes (rectification synchrone).

Les condensateurs 70, 74 sont localisés près des "flybacks" 62 pour minimiser les boucles de commutation. Les condensateurs 76, les diodes 78 et les résistances 80 servent à adapter les niveaux d'impulsion pour satisfaire les références de tension qui diffèrent d'un étage à l'autre. Le bus 64, quant à lui, est référé à un contrôleur de module 82 via la "masse" 84, laquelle diffère d'un module de batteries 14 à l'autre.

Le contrôleur 82 peut gérer les impulsions de grille de façon à maintenir la tension sur le bus 64 et, ce faisant, à s'assurer que la somme des transferts nets soit nulle. Le contrôleur 82 peut s'occuper aussi de la collecte des tensions de cellule, du courant du module grâce à un capteur 86, et possiblement des températures. Le contrôleur 82 est de préférence en constante relation avec le contrôleur principal 38 du système et se partage les tâches avec celui-ci. Outre l'équilibrage, les deux contrôleurs 82, 38 s'occupent de la protection des modules de batterie 14 notamment en surveillant les excursions anormales de tension de cellules et de température. Le contrôleur principal 38 peut aussi gérer l'opération des modules de contacteurs 32, 34, 50 (montrés aux Figures 7 et 8), 42 (montré à la Figure 9A), et 48 (montré à la Figure 9B).

Comme le courant d'équilibrage fin n'est pas comptabilisé par le capteur 86, il peut être estimé par les tensions des cellules 60, la tension du bus 64 et la largeur et le nombre des impulsions conjointement avec la valeur connue d'inductance des transformateurs 30.

Comme les petits "flybacks" 62 limitent la puissance d'équilibrage intramodule pour les raisons de simplicité et de coût mentionnées ci-haut, il importe de s'assurer que les cellules 60 à l'intérieur d'un même module 14 soient homogènes (même lot et même historique de vieillissement) et que les conditions qu'elles subissent soient les mêmes.

Si la taille du système requiert un grand nombre de cellules 60 en parallèle, il est préférable de considérer une mise en parallèle de colonnes complètes d'une façon similaire à la Figure 8. En effet, la mise en parallèle étage par étage requerrait un moyen de commander séparément en un grand nombre de points le courant, lequel atteint des valeurs élevées par surcroit.

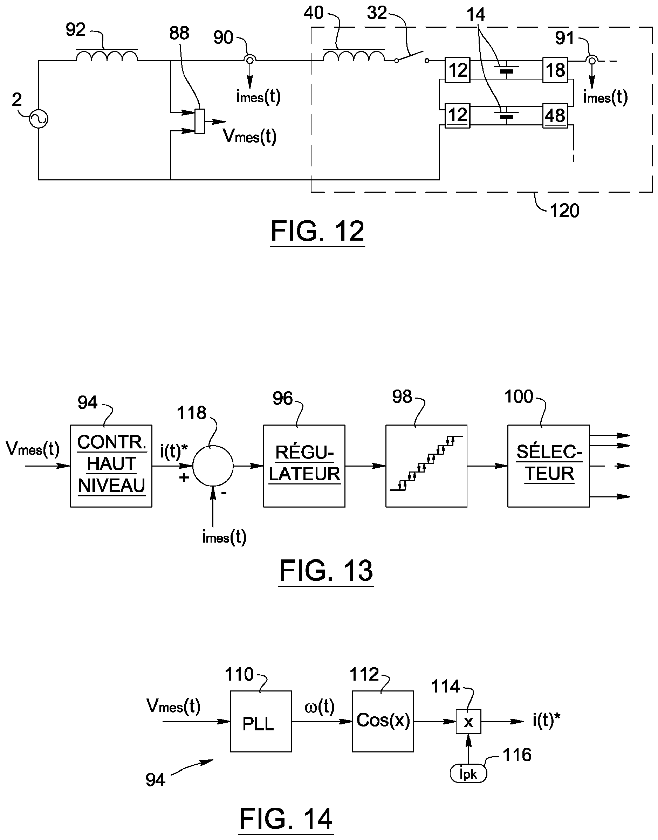

En référence à la Figure 12, il est montré un exemple de contexte d'utilisation comprenant des points de mesure fournis par un capteur de tension 88 produisant un signal de tension mesurée $V_{mes}(t)$ et un capteur de courant 90 produisant un signal de courant mesuré $i_{mes}(t)$ tel que requis pour régulariser le courant pendant la recharge des modules de batterie intermédiaires 14 ou pour l'assistance au réseau 2. L'inductance 92 représente l'inductance équivalente du réseau 2, alors que l'inductance 40 représente ici l'inductance faisant partie du système.

En référence à la Figure 13, il est montré un système de contrôle capable de gérer les convertisseurs 12 (montrés par exemple à la Figure 12) afin de suivre une consigne de courant de réseau 2, laquelle satisfait une ou plusieurs fonctions telles que la recharge à facteur de puissance unitaire, la gestion de la pointe ou même le retour d'énergie vers le réseau 2. Le système de contrôle peut être intégré au contrôleur principal 38 (montré à la Figure 11) ou réalisé autrement si voulu. Le système de contrôle comporte un contrôleur de haut niveau 94 qui détermine le courant approprié par exemple selon les techniques classiques de production distribuée. Un régulateur 96, possiblement de type proportionnel plus intégral, produit une cible de tension qui est discrétisée par un bloc 98 qui fournit une tension qui peut se traduire par un nombre de tandems 12 et 14 (montrés par exemple à la Figure 12) nécessaires en série à chaque instant. Un bloc 100 relié individuellement aux ponts 12 (montrés par exemple à la Figure 12) comporte un algorithme de décision qui détermine lesquels des tandems 12 et 14 seront mis à contribution de façon à équilibrer les niveaux de charge entre les modules de batterie 14 (montrés par exemple à la Figure 12) et à minimiser les commutations consécutives sur chacun des semi-conducteurs 44C, 44D, 44E, 44F (montrés à la Figure 10). Une stratégie de PWM multi-niveaux se trouve ainsi effectivement implémentée.

En référence à nouveau à la Figure 10, lorsqu'un module 12 est mis à contribution pour produire une tension positive, les MOSFETs 44C et 44F sont mis en conduction. Pour une tension négative, ce sont les MOSFETs 44D et 44E. Pour une tension nulle, il faut tout de même que le courant passe et deux possibilités se présentent: conduction des MOSFETs 44C et 44D ou conduction des MOSFETs 44E et 44F. De préférence, les deux possibilités sont utilisées aussi souvent l'une que l'autre afin de répartir la dissipation également entre les semi-conducteurs 44C, 44D, 44E, 44F. Dans tous les cas, des transitions de type "break before make" servent à éviter de court-circuiter les modules de batterie 14. Des condensateurs de découplage (non illustrés) du côté DC à proximité d'un pont 12 permettent de réduire les boucles de commutation.

En référence à la Figure 14, il est montré un exemple de contrôleur de haut niveau 94 destiné au cas particulier d'une charge à facteur de puissance unitaire. Un "phase locked loop" (PLL) 110 fournit l'angle instantané $\omega$(t) du fondamental de tension relatif au signal $V_{mes}$(t). Un bloc cosinus 112 reconstitue un signal de même phase, mais d'amplitude unitaire. Le signal obtenu est multiplié 114 par l'amplitude désirée du courant $i_{pk}$ 116 pour fournir la cible de courant instantané i(t)* qui sera acheminée au sommateur 118 (montré à la Figure 13).

Dans un autre cas où on désirerait plutôt inverser la puissance, il suffirait simplement d'inverser le signe de la sortie du multiplicateur 114 ou encore d'ajouter 180 degrés à l'entrée du bloc 112.

En référence à nouveau à la Figure 12, dans un mode d'opération où les modules de batterie 14 échangent leur énergie avec celle du dispositif électrique de puissance 4 (comme la batterie de puissance tel que montré par exemple à la Figure 2), le signal de courant mesuré $i_{mes}$(t) provient d'un capteur de courant 91 connecté au convertisseur de puissance 18, et la boucle de commande du courant instantané i(t)* peut être constituée des blocs 118, 96, 98, 100 montrés à la Figure 13, si un grand nombre de modules 18 non contournés par des modules de contacteurs 42 (tel que montré à la Figure 9A) est utilisé. On obtient ici aussi un PWM multi-niveaux. Cependant, cela risque de détériorer le rendement puisque les courants sont très élevés (près d'un ordre de grandeur au dessus de ceux impliqués lors de l'utilisation des modules 12 et qu'il est préférable de maintenir au minimum le nombre de semi-conducteurs parcourus par les forts courants en question.

Pour la régulation du courant instantané i(t)*, il est alors préférable de travailler avec deux modules 18 non contournés (actifs) procurant un ajustement fin du courant avec une stratégie PWM à deux ou trois niveaux classique. Cela n'empêche pas de changer les modules 18 actifs à toutes les minutes, par exemple, pour équilibrer le niveau de charge/décharge des modules de batterie 14.

Puisque, dans ce mode, la tension des modules de batterie 14 et celle du dispositif électrique de puissance 4 conservent le même signe, il est possible de maintenir l'ajustement du courant dans les deux directions avec un demi-pont 18 constitué des semi-conducteurs 44A et 44B (tel que montré à la Figure 9A). Similairement à l'opération des modules 12, un module 18 présente une tension positive si le MOSFET 44A (ou sa diode intrinsèque 46) est en conduction et une tension nulle si le MOSFET 44B (ou sa diode intrinsèque 46) le devient. Encore ici, une séquence de commutation de type "break before make" est suivie et des condensateurs de découplage (non illustrés) sont disposés du côté DC près des semi-conducteurs 44A et 44B.

Jusqu'à ce point, les stratégies décrites de régulation du courant instantané par PWM multi-niveaux ou non, tant des modules 12 que 18, faisaient abstraction du séquencement des modules de contacteurs 32, 34, 36 (tel que montrés à la Figure 4), 42, 48 (montrés aux Figures 9A et 9B) et 50 (montré à la Figure 8). Leur opération est décrite dans les lignes qui suivent, avec une batterie de puissance (e.g. d'un véhicule électrique) comme exemple de dispositif électrique de puissance 4. L'action du PWM est rapide et continue de nature alors que les modules de contacteurs 32, 34, 36, 42, 48, 50 ne sont utilisés que quelques fois durant un cycle de transfert d'énergie avec la batterie de puissance 4. Ils sont aussi utilisés pour changer de mode d'opération (côté réseau 2 actif vs côté batterie 4 actif).

En mode d'échange avec le réseau 2, les étapes suivantes peuvent être réalisées:

     1. Initialement, les modules de contacteurs 32, 34, 50 (si applicable), 42 et 48 sont ouverts.
     2. Mettre à contribution le nombre approprié de modules convertisseurs 12 pour approximer la tension à vide du réseau 2 qui prévaudra à l'instant estimé de fermeture des modules de contacteurs 32 et 50.
     3. Fermer les modules de contacteurs 32 et 50.
     4. Laisser agir les contrôleur 94 et régulateur 96 pour obtenir le courant approprié. Pour un équilibrage du niveau de charge plus agressif, il est possible de remplacer deux étages 12 nuls par un de tension positive et un de tension négative. L'effet sur le réseau 2 sera imperceptible, mais un échange effectif d'énergie entre des modules de batterie 14 se produira. De plus, si vers la fin de la recharge seulement quelques modules de batterie 14 requièrent de poursuivre alors que les autres sont pleins, il est possible d'utiliser cette même technique en alternant le rôle de chaque module 14 de façon à ce que le transfert net à moyen terme soit nul pour les modules 14 pleins et positif pour les quelques autres qui restent.
5. Lorsque la charge de tous les modules 14 est complète, réduire graduellement à zéro le courant spécifié par la consigne 116.
6. Ouvrir les modules de contacteurs 32 et 50.

En mode d'échange avec la batterie 4, les étapes suivantes peuvent être réalisées:

1. Initialement, les modules de contacteurs 32, 34, 50 (si applicable), 42 et 48 sont ouverts.
2. Le véhicule (ou autre dispositif électrique) contenant la batterie 4 et le système négocient un profil temporel de courant de charge en fonction, entre autres

- du besoin d'énergie de la batterie 4,
- de la capacité restante des modules 14,
- de la technologie de batterie utilisée,
- de la période de relaxation finale destinée à équilibrer les cellules de la batterie 4 ou même celle des modules 14.

3. La tension de la batterie 4 est mesurée.
4. Un scénario est établi par le contrôleur principal 38 qui subdivise la période de charge à venir en quelques segments de quelques minutes (ou moins) de façon à

- répartir l'énergie à prélever entre les modules 14 selon leur état de charge ("state of charge" ou SOC) individuel,
- minimiser le nombre de manoeuvres des modules de contacteurs,
- laisser un minimum de deux modules 18 actifs (PWM).

5. Les modules de contacteurs 42 et 48 sont configurés conformément au premier segment du scénario. Si un étage est requis en PWM, le module de contacteur 42 sera ouvert. Sinon il occupera une des deux autres positions. Les modules de contacteurs 48 des étages non PWM devront occuper une des deux positions extrêmes (la position centrale ne peut pas être utilisée, car le courant doit passer) selon que le module 14 correspondant doit être mis à contribution ou non. Le total des tensions de modules 14 contributifs doit approximer la tension mesurée à l'étape 3.
6. Les modules de contacteurs 34 sont fermés.
7. Les étages PWM participent en continu à la régulation du courant selon le profil négocié à l'étape 2.
8. Si la tension des deux étages PWM actifs requise pour réguler le courant s'approche de plus d'une demi-tension de module de la limite qui lui ferait perdre le contrôle, une reconfiguration est initiée: le courant est réduit à zéro par les 2 étages PWM, puis une nouvelle configuration des modules de contacteurs 42 et 48 est effectuée de façon à recentrer la plage de tension ajustable autour de la nouvelle valeur requise (Figure 6); finalement, le courant est reporté à sa valeur désirée par l'action des étages PWM.
9. Similairement, lorsque la fin d'un segment du scénario est atteinte, le courant est ramené à zéro, les modules de contacteurs 42 et 48 sont reconfigurés puis le courant est reporté à sa valeur désirée amorçant ainsi le segment suivant.
10. À la fin du dernier segment, le courant est réduit à zéro, puis tous les modules de contacteurs 32, 34, 50 (si applicable), 42 et 48 sont ouverts. Alternativement, on peut interrompre prématurément le dernier segment, puis réévaluer la finale en fonction du niveau de charge effectif restant dans chaque module 14 et en fonction des besoins de la batterie 4.

Dans les cas où les impédances de batteries seraient élevées ou encore dans ceux où la tension des modules 14 seraient faibles, il se peut que plus de deux étages 18 actifs soient requis en tout temps. La marche à suivre demeure néanmoins similaire.

On peut imaginer une situation où il est requis de transférer un bloc d'énergie de la batterie 4 vers les modules de batterie 14 (par exemple pour utiliser l'énergie d'un véhicule lors d'une panne de réseau). La marche à suivre serait la même sauf pour le courant qui serait de signe contraire. Évidemment, les modules 14 doivent être initialement suffisamment déchargés pour accepter le bloc d'énergie.

En référence à la Figure 15, il est montré une réalisation applicable, par exemple, pour une station-service et qui permet de contourner la contrainte de l'opération séquentielle des topologies des Figures 4, 5, 7 et 8: puisqu'une quantité de stockage local importante est requise, il est avantageux de la segmenter en plusieurs chargeurs 120 (comme montré à la Figure 12, leurs modules de contacteurs 32 et 34 étant montrés à l'extérieur pour illustrer le principe). Chaque pistolet de rechargement 122 a la possibilité d'être relié à un parmi plusieurs chargeurs 120 grâce à une pluralité de modules de contacteurs 34. Ainsi, un seul parmi un groupe peut servir à faire le plein alors que les autres continuent la recharge de leur réserve locale 14 par le réseau 2. D'une fois à l'autre, un chargeur 120 différent peut automatiquement être utilisé, répartissant ainsi la charge entre eux. Pour un réseau 2 triphasé, la sélection peut aussi tenir compte du balancement approximatif des courants.

En référence aux Figures 16, 17 et 18, il est montré des réalisations du système de recharge pouvant particulièrement convenir à une application où le dispositif électrique de puissance 4 est constitué de rails de métro ou une caténaire de train. Pour des fins de simplification uniquement, il sera fait référence dans la description qui suit à des rails de métro. Il doit cependant être compris que les réalisations du système ne sont pas limitées à cet exemple.

En référence en particulier à la Figure 16, il est montré une réalisation du système de recharge multi-niveaux assimilable à celle de la Figure 3 où les chargeurs 12 peuvent être de faible puissance, mais plus complexes (pas de simples VSC) en raison des étages d'isolation 31 utilisés du fait que les chargeurs 12 sont reliés ensemble par un bus parallèle 124. Une boucle série 126 (comme illustré à la Figure 17) peut remplacer le bus parallèle si la topologie des chargeurs 12 le permet. Le système de la Figure 16 peut demeurer connecté en permanence avec les rails 4 si voulu.

En référence à la Figure 17, il est montré une réalisation du système de recharge multi-niveaux assimilable à celle de la Figure 5, mais sans le réseau 2. Les chargeurs 12 peuvent être formés de VSC à deux quadrants à faible courant. Les convertisseurs 18 peuvent être formés de VSC à fort courant. En pareil cas, la boucle série 126 les reliant comporte un arrangement série formé d'une inductance 40 et d'un module de contacteur 32. Un arrangement série formé d'une inductance 28 et d'un module de contacteur 34 est connecté entre la borne de connexion 6 et un des étages à convertisseur 16. Dans cette réalisation, l'équilibrage des modules de batterie 14 via les chargeurs 12 ne peut pas se produire simultanément avec l'arrivée (recharge des modules de batterie 14) ou le départ (restitution d'énergie stockée dans les modules de batterie 14) d'un métro. L'équilibrage précité concerne des échanges entre des modules de batterie de puissance 14 entiers. Un équilibrage très lent entre les cellules 60 (montrées à la Figure 11) d'un même module de batterie 14 demeure. Une extension du bus 64 (montré à la Figure 11) à d'autres modules de batterie de puissance 14 permet d'échanger de petites puissances entre les modules de batterie de puissance 14.

En référence à la Figure 18, il est montré une réalisation du système de recharge multi-niveaux qui représente un cas particulier de celle de la Figure 17, où les chargeurs 12 et la boucle 126 incluant l'inductance 40 et le module de contacteur 32 sont omis. L'équilibrage distinct des étages de stockage interne d'énergie 10 implique quelques manoeuvres supplémentaires des modules de contacteurs 48 si m > 0 (m représentant le nombre d'étages de stockage interne d'énergie 10). Si m = 0 (et donc n ≥ 2), l'équilibrage complet peut se faire en continu, même pendant les démarrages ou arrêts de métros, sans avoir à manoeuvrer de modules de contacteurs (ou commutateurs).

Bien que des réalisations de l'invention aient été illustrées dans les dessins ci-joints et décrites ci-dessus, il apparaîtra évident pour les personnes versées dans l'art que des modifications peuvent être apportées à ces réalisations sans s'écarter de l'invention. Par exemple, les modules de contacteurs 32, 34, 36, 42, 48, 50 peuvent être réalisés par des commutateurs à semi-conducteurs ou autres types de commutateurs appropriés si voulu. Lorsque n ≥ 2 et n + m ≥ 4, et en particulier lorsque les niveaux de tension ou de puissance requis nécessitent un grand nombre d'étages 10, 16, ceux-ci peuvent être distribués de manière à former des groupes (ou des colonnes de groupes) connectés en parallèle ou en série (comme dans les Figures 7 et 8) connectés entre des arrangements comprenant des inductances 28, 40 et des commutateurs ou modules de contacteurs 32, 34 sélectivement opérables pour sélectionner les groupes d'étages 10, 16 en condition d'échanger de l'énergie avec le dispositif électrique de puissance 4.

## Revendications

1. Système de recharge rapide multi-niveaux pour échanger de l'énergie avec un dispositif électrique de puissance (4) qui impose une tension prédéterminée à ses bornes, le système de recharge rapide comprenant:

   - des bornes de connexion (6, 8) avec le dispositif électrique de puissance (4);
   - un nombre n d'étages à convertisseur (16) et un nombre m d'étages de stockage interne d'énergie (10) connectés en série entre les bornes de connexion (6, 8), avec n ≥ 1, m ≥ 0 et n+m ≥ 2, chaque étage à convertisseur (16) ayant un convertisseur de puissance (18) couplé, d'un côté du convertisseur de puissance (18) opposé à un côté des bornes de connexion (6,8), à un arrangement comprenant au moins un d'un module de batterie de puissance intermédiaire (14) et une connexion (26) à une source d'alimentation électrique (20), chaque étage de stockage interne d'énergie (10) ayant un module de batterie de puissance intermédiaire (14), au moins un module de batterie de puissance intermédiaire (14) étant présent dans le système de recharge rapide multi-niveau, chaque module de batterie de puissance intermédiaire (14) étant **caractérisé par** une tension à vide élevée par rapport à des chutes de tension dues à des impédances internes du module de batterie de puissance intermédiaire (14), le module de batterie de puissance intermédiaire (14) de chaque étage de stockage interne d'énergie (10) et le convertisseur de puissance (18) de chaque étage à convertisseur (16) étant connectés ensemble en série de manière à être en condition d'échanger de l'énergie avec le dispositif électrique de puissance (4);

une unité de contrôle (38) contrôlant une contribution de chaque étage à convertisseur (16) et, le cas échéant, de chaque étage de stockage interne d'énergie (10) pour échanger de l'énergie avec le dispositif électrique de puissance (4); et
une inductance (28) connectée entre une des bornes de connexion (6, 8) et un des étages à convertisseur (16).

2. Le système de recharge rapide selon la revendication 1, dans lequel:

$$m = 0;$$

et l'arrangement de chaque étage à convertisseur (16) comprend le module de batterie de puissance intermédiaire (14) correspondant,
le système de recharge rapide comprenant de plus:

un arrangement série formé de l'inductance (28) et d'un commutateur (34) connecté entre une des bornes de connexion (6, 8) et un des étages (16, 10).

3. Le système de recharge rapide selon la revendication 1, dans lequel:

$$m \geq 1;$$

l'arrangement de chaque étage à convertisseur (16) comprend le module de batterie de puissance intermédiaire (14) correspondant; et
au moins un des étages de stockage interne d'énergie (10) a de plus un module contacteur (48) opérationnellement couplé au module de batterie de puissance intermédiaire (14) correspondant pour sélectivement contourner, mettre en circuit et mettre hors circuit le module de batterie de puissance intermédiaire (14) correspondant,
le système de recharge rapide comprenant de plus:

un arrangement série formé de l'inductance (28) et d'un commutateur (34) connecté entre une des bornes de connexion (6, 8) et un des étages (16, 10).

4. Le système de recharge rapide selon la revendication 2, dans lequel:

l'arrangement de plusieurs des étages à convertisseur (16) comprend de plus un chargeur (12) couplé au module de batterie de puissance intermédiaire (14) correspondant,

le système de recharge rapide comprenant de plus:

une boucle série connectant les chargeurs (12) en série, la boucle série ayant un arrangement série formé d'une inductance (40) et d'un commutateur (32).

5. Le système de recharge rapide selon la revendication 1, dans lequel:

$$m \geq 1;$$

l'arrangement de chaque étage à convertisseur (16) comprend le module de batterie de puissance intermédiaire (14) correspondant, et pour au moins un des étages à convertisseur (16), un chargeur (12) couplé au module de batterie de puissance intermédiaire (14) correspondant; et
au moins un des étages de stockage interne d'énergie (10) a de plus un module contacteur (48) opérationnellement couplé au module de batterie de puissance intermédiaire (14) correspondant pour sélectivement contourner, mettre en circuit et mettre hors circuit le module de batterie de puissance intermédiaire (14) correspondant, et un chargeur (12) couplé au module de batterie de puissance intermédiaire (14) correspondant;
le système de recharge rapide comprenant de plus:

une boucle série connectant les chargeurs (12) en série, la boucle série ayant un arrangement série formé d'une inductance (40) et d'un commutateur (32); et
un arrangement série formé de l'inductance (28) et d'un commutateur (34) connecté entre une des bornes de connexion (6, 8) et un des étages (16, 10).

6. Le système de recharge rapide selon la revendication 1, dans lequel:

$$m = 0;$$

et l'arrangement de chaque étage à convertisseur (16) comprend le module de batterie de puissance intermédiaire (14) correspondant, et pour plusieurs des étages à convertisseur (16), un chargeur (12) couplé au module de batterie de puissance intermédiaire (14) correspondant,
le système de recharge rapide comprenant de plus:

un bus parallèle (124) reliant les chargeurs (12) ensemble.

**7.** Le système de recharge rapide selon la revendication 1, dans lequel:

$$m \geq 1;$$

l'arrangement de chaque étage à convertisseur (16) comprend le module de batterie de puissance intermédiaire (14) correspondant, et pour au moins un des étages à convertisseur (16), un chargeur (12) couplé au module de batterie de puissance intermédiaire (14) correspondant; et

au moins un des étages de stockage interne d'énergie (10) a de plus un chargeur (12) couplé au module de batterie de puissance intermédiaire (14) correspondant,

le système de recharge rapide comprenant de plus:

un bus parallèle (124) reliant les chargeurs (12) ensemble.

**8.** Le système de recharge rapide selon la revendication 1, dans lequel:

$$m \geq 1;$$

l'arrangement d'au moins un des étages à convertisseur (16) comprend la connexion (26) à la source d'alimentation électrique (20); et

au moins un des étages de stockage interne d'énergie (10) a de plus un chargeur (12) couplé au module de batterie de puissance intermédiaire (14) correspondant, le chargeur (12) se connectant à la source d'alimentation électrique (2).

**9.** Le système de recharge rapide selon la revendication 1, dans lequel:

le convertisseur de puissance (18) de chaque étage à convertisseur (16) comprend un convertisseur à source de tension;

**10.** Le système de recharge rapide selon la revendication 8, dans lequel:

l'arrangement d'au moins un des étages à convertisseur (16) comprend le module de batterie de puissance intermédiaire (14) correspondant et la connexion à la source d'alimentation électrique (2, 20), en plus d'un chargeur (12) couplé entre le module de batterie de puissance intermédiaire (14) correspondant et la connexion à la source d'alimentation électrique (2, 20).

**11.** Le système de recharge rapide selon la revendication 10, comprenant de plus:

une boucle série formée d'un arrangement série comprenant au moins un commutateur (32) et une inductance (40) se couplant à la connexion à la source d'alimentation électrique (2) et connectant les chargeurs (12) en série;

une boucle série formée d'un arrangement série comprenant au moins un commutateur (34) et l'inductance (28) se couplant aux bornes de connexion (6, 8) et connectant en série le convertisseur de puissance (18) de chaque étage à convertisseur (16) et le module de batterie de puissance intermédiaire (14) de chaque étage de stockage interne d'énergie (10); et

lorsque $m \geq 2$, entre au moins deux des étages de stockage interne d'énergie (10) qui se suivent, un commutateur (36) connecté entre les modules de batterie de puissance intermédiaire (14) correspondant.

**12.** Le système de recharge rapide selon la revendication 10, dans lequel:

au moins un des étages de stockage interne d'énergie (10) a de plus un module contacteur (48) opérationnellement couplé au module de batterie de puissance intermédiaire (14) correspondant pour sélectivement contourner, mettre en circuit et mettre hors circuit le module de batterie de puissance intermédiaire (14) correspondant,

le système de recharge rapide comprenant de plus:

une boucle série formée d'un arrangement série comprenant au moins un commutateur (32) et une inductance (40) se couplant à la connexion à la source d'alimentation électrique (2) et connectant les chargeurs (12) en série; et

une boucle série formée d'un arrangement série comprenant au moins un commutateur (34) et l'inductance se couplant aux bornes de connexion (6, 8) et connectant en série le convertisseur de puissance (18) de chaque étage à convertisseur (16) et le module de batterie de puissance intermédiaire (14) de chaque étage de stockage interne d'énergie (10) via le module contacteur (48) correspondant le cas échéant.

**13.** Le système de recharge rapide selon la revendication 8, dans lequel:

plusieurs des étages de stockage interne d'énergie (10) comprennent des chargeurs (12) couplés aux modules de batterie de puissance intermédiaires (14) correspondant; et

l'unité de contrôle (38) a un mode d'opération modulant séparément une puissance de charge de chaque chargeur (12) des étages de stockage interne d'énergie (10).

**14.** Le système de recharge rapide selon la revendication 8, dans lequel:

la source d'alimentation électrique (20) provient d'un réseau électrique (2);

$$m \geq 2;$$

et
l'unité de contrôle (38) a un mode d'opération gérant chaque chargeur (12) des étages de stockage interne d'énergie (10) de manière à suivre une consigne de courant du réseau électrique (2).

**15.** Le système de recharge rapide selon la revendication 14, dans lequel l'unité de contrôle (38) comprend un contrôleur (94) déterminant un courant à transiter, un régulateur de courant (96) produisant une cible de tension basée sur le courant à transiter, un module de discrétisation (98) de la cible de tension, et un module de sélection (100) d'étages de stockage interne d'énergie (10) à mettre en contribution pour transférer de l'énergie entre le réseau électrique (2) et les batteries de puissance intermédiaires (14) selon une discrétisation de la cible de tension fournie par le module de discrétisation (98).

**16.** Le système de recharge rapide selon la revendication 8, dans lequel le dispositif électrique de puissance (4) comporte une batterie de puissance se connectant aux bornes de connexion (6, 8) et **caractérisée par** une tension à vide élevée par rapport à des chutes de tension dues à des impédances internes de la batterie de puissance.

**17.** Le système de recharge rapide selon la revendication 1, dans lequel:

au moins un des étages à convertisseur (16) comprend un module contacteur (42) opérationnellement connecté pour sélectivement contourner, mettre en circuit et mettre hors circuit le convertisseur de puissance (18) correspondant.

**18.** Le système de recharge rapide selon la revendication 1, dans lequel:

$$n \geq 2;$$

$$n + m \geq 4;$$

et les étages à convertisseur (16) et les étages de stockage interne d'énergie (10) le cas échéant sont distribuées de manière à former des groupes connectés en parallèle ou en série et opérationnellement connectés entre des arrangements comprenant des inductances (40, 28) et des commutateurs (32, 34) sélectivement opérables pour sélectionner les groupes d'étages en condition d'échanger de l'énergie avec le dispositif électrique de puissance (4).

**19.** Le système de recharge rapide selon la revendication 1, dans lequel chaque module de batterie de puissance intermédiaire (14) comprend un arrangement de cellules élémentaires (60) couplées à des convertisseurs Flyback (62) reliés à un bus commun (64), les convertisseurs Flyback (62) étant opérés par un contrôleur (82) de manière à maintenir une tension sur le bus commun (64) et effectuer un équilibrage entre les cellules élémentaires (60) par transfert d'énergie avec le bus commun (60).

**Patentansprüche**

**1.** Mehrstufiges Schnellaufladesystem zum Austauschen von Energie mit einer elektrischen Leistungsvorrichtung (4), die an ihre Anschlüsse eine vorgegebene Spannung anlegt, wobei das Schnellaufladesystem Folgendes umfasst:

- Verbindungsanschlüsse (6, 8) mit der elektrischen Leistungsvorrichtung (4);
- eine Anzahl n von Umsetzerstufen (16) und eine Anzahl m von internen Energiespeicherstufen (10), die zwischen den Verbindungsanschlüssen (6, 8) in Reihe geschaltet sind, wobei $n \geq 1$, $m \geq 0$ und $n + m \geq 2$, wobei jede Umsetzerstufe (16) einen Leistungsumsetzer (18) besitzt, der auf einer Seite des Leistungsumsetzers (18) gegenüber einer Verbindungsanschlussseite (6, 8) mit einer Anordnung gekoppelt ist, die wenigstens ein Zwischenleistungs-Batteriemodul (14) und eine Verbindung (26) mit einer Quelle (20) für elektrische Versorgung aufweist, wobei jede interne Energiespeicherstufe (10) ein Zwischenleistungs-Batteriemodul (14) besitzt, wobei wenigstens ein Zwischenleistungs-Batteriemodul (14) in dem mehrstufigen Schnellaufladesystem vorhanden ist, wobei jedes Zwischenleistungs-Batteriemodul (14) durch eine Leerlaufspannung gekennzeichnet ist, die in Bezug auf Spannungsabfälle, die durch interne Impedanzen des Zwischenleistungs-Batteriemoduls (14) bedingt sind, hoch ist, wobei das Zwischenleistungs-Batteriemodul (14) jeder internen Energiespeicherstufe (10) und der Leistungsumsetzer (18) jeder Umsetzerstufe (16) miteinander in Reihe geschaltet sind, derart, dass sie in der Lage sind, mit der elektrischen Leistungsvorrichtung (4) Energie auszutauschen;

eine Steuereinheit (38), die einen Beitrag jeder Umsetzerstufe (16) und gegebenenfalls jeder internen Speicherstufe (10) steuert, um die Energie mit der elektrischen Leistungsvorrichtung (4) auszutauschen; und
eine Induktivität (28), die zwischen einen der Verbindungsanschlüsse (6, 8) und eine der Umsetzerstufen (16) geschaltet ist.

2. Schnellaufladesystem nach Anspruch 1, wobei:

$$m = 0;$$

und
die Anordnung jeder Umsetzerstufe (16) das entsprechende Zwischenleistungs-Batteriemodul (14) enthält,
wobei das Schnellaufladesystem außerdem Folgendes umfasst:

eine Reihenanordnung, die aus der Induktivität (28) und einem Kommutator (34), der zwischen die Verbindungsanschlüsse (6, 8) und eine der Stufen (16, 10) geschaltet ist, gebildet ist.

3. Schnellaufladesystem nach Anspruch 1, wobei:

$$m \geq 1;$$

die Anordnung jeder Umsetzerstufe (16) das entsprechende Zwischenleistungs-Batteriemodul (14) enthält; und
wenigstens eine der internen Energiespeicherstufen (10) außerdem ein Kontaktgebermodul (48) besitzt, das mit dem entsprechenden Zwischenleistungs-Batteriemodul (14) betriebstechnisch gekoppelt ist, um das entsprechende Zwischenleistungs-Batteriemodul (14) wahlweise zu umgehen, in den Schaltkreis aufzunehmen oder aus dem Schaltkreis zu entfernen,
wobei das Schnellaufladesystem außerdem Folgendes umfasst:

eine Reihenanordnung, die aus der Induktivität (28) und aus einem Kommutator (34), der zwischen die Verbindungsanschlüsse (6, 8) und eine der Stufen (16, 10) geschaltet ist, gebildet ist.

4. Schnellaufladesystem nach Anspruch 2, wobei:

die Anordnung mehrerer Umsetzerstufen (16) außerdem eine Ladeeinrichtung (12) umfasst, die mit dem entsprechenden Zwischenleistungs-Batteriemodul gekoppelt ist;

das Schnellaufladesystem außerdem Folgendes umfasst:

eine Reihenschaltung, die die Ladeeinrichtungen (12) in Reihe verbindet, wobei die Reihenschaltung eine Reihenanordnung besitzt, die aus einer Induktivität (40) und aus einem Kommutator (32) gebildet ist.

5. Schnellaufladesystem nach Anspruch 1, wobei:

$$m \geq 1;$$

die Anordnung jeder Umsetzerstufe (16) das entsprechende Zwischenleistungs-Batteriemodul (14) und für wenigstens eine der Umsetzerstufen (16) eine Ladeeinrichtung (12) umfasst, die mit dem entsprechenden Zwischenleistungs-Batteriemodul (14) gekoppelt ist; und
wenigstens eine der internen Energiespeicherstufen (10) außerdem ein Kontaktgebermodul (48) besitzt, das mit dem entsprechenden Zwischenleistungs-Batteriemodul (14) betriebstechnisch gekoppelt ist, um das entsprechende Zwischenleistungs-Batteriemodul (14) zu umgehen, in den Schaltkreis aufzunehmen oder aus dem Schaltkreis zu entfernen, und eine Ladeeinrichtung (12) besitzt, die mit dem entsprechenden Zwischenleistungs-Batteriemodul (14) gekoppelt ist;
wobei das Schnellaufladesystem Folgendes umfasst:

eine Reihenschaltung, die die Ladeeinrichtungen (12) in Reihe verbindet, wobei die Reihenschaltung eine Reihenanordnung besitzt, die aus einer Induktivität (40) und aus einem Kommutator (32) gebildet ist; und eine Reihenanordnung, die aus der Induktivität (28) und einem Kommutator (34), der zwischen die Verbindungsanschlüsse (6, 8) und eine der Stufen (16, 10) geschaltet ist, gebildet ist.

6. Schnellaufladesystem nach Anspruch 1, wobei:

$$m = 0;$$

und
die Anordnung jeder Umsetzerstufe (16) das entsprechende Zwischenleistungs-Batteriemodul (14) und für mehrere Umsetzerstufen (16) eine Ladeeinrichtung (12), die mit dem entsprechenden Zwischenleistungs-Batteriemodul (14) gekoppelt ist, umfasst;

wobei das Schnellaufladesystem außerdem Folgendes umfasst:

einen parallelen Bus (124), der die Ladeeinrichtungen (12) miteinander verbindet.

7. Schnellaufladesystem nach Anspruch 1, wobei:

$$m \geq 1;$$

die Anordnung jeder Umsetzerstufe (16) das entsprechende Zwischenleistungs-Batteriemodul (14) und für wenigstens eine der Umsetzerstufen (16) eine Ladeeinrichtung (12), die mit dem entsprechenden Zwischenleistungs-Batteriemodul (14) gekoppelt ist, umfasst; und

wenigstens eine der internen Energiespeicherstufen (10) außerdem eine Ladeeinrichtung (12) besitzt, die mit dem entsprechenden Zwischenleistungs-Batteriemodul (14) gekoppelt ist,

wobei das Schnellaufladesystem außerdem Folgendes umfasst:

einen parallelen Bus (124), der die Ladeeinrichtungen (12) miteinander verbindet.

8. Schnellaufladesystem nach Anspruch 1, wobei:

$$m \geq 1;$$

die Anordnung wenigstens einer der Umsetzerstufen (16) die Verbindung (26) mit der elektrischen Versorgungsquelle (20) aufweist; und

wenigstens eine der internen Energiespeicherstufen (10) außerdem eine Ladeeinrichtung (12) besitzt, die mit dem entsprechenden Zwischenleistungs-Batteriemodul (14) gekoppelt ist, wobei sich die Ladeeinrichtung (12) mit der elektrischen Versorgungsquelle (2) verbindet.

9. Schnellaufladesystem nach Anspruch 1, wobei:

der Leistungsumsetzer (18) jeder Umsetzerstufe (16) einen Umsetzer mit Spannungsquelle umfasst.

10. Schnellaufladesystem nach Anspruch 8, wobei:

die Anordnung wenigstens einer der Umsetzerstufen (16) das entsprechende Zwischenleistungs-Batteriemodul (14) und die Verbindung mit der elektrischen Versorgungsquelle (2, 20) zusätzlich zu einer Ladeeinrichtung (12), die zwischen das entsprechende Zwischenleistungs-Batteriemodul (14) und die Verbindung mit der elektrischen Versorgungsquelle (2, 20) gekoppelt ist, umfasst.

11. Schnellaufladesystem nach Anspruch 10, das außerdem Folgendes umfasst:

eine Reihenschaltung, die aus einer Reihenanordnung gebildet ist, die wenigstens einen Kommutator (32) und eine Induktivität (40) enthält, und mit der Verbindung mit der elektrischen Versorgungsquelle (2) koppelt und die Ladeeinrichtungen (12) in Reihe schaltet;

eine Reihenschaltung, die aus einer Reihenanordnung gebildet ist, die wenigstens einen Kommutator (34) und eine Induktivität (28) enthält, die mit den Verbindungsanschlüssen (6, 8) koppeln und den Leistungsumsetzer (18) jeder Umsetzerstufe (16) und das Zwischenleistungs-Batteriemodul (14) jeder internen Energiespeicherstufe (10) in Reihe schaltet; und

dann, wenn m ≥ 2, zwischen wenigstens zwei internen Energiespeicherstufen (10), die aufeinander folgen, einen Kommutator (36), der zwischen die entsprechenden Zwischenleistungs-Batteriemodule (14) geschaltet ist.

12. Schnellaufladesystem nach Anspruch 10, wobei:

wenigstens eine der internen Energiespeicherstufen (10) außerdem ein Kontaktgebermodul (48) besitzt, das mit dem entsprechenden Zwischenleistungs-Batteriemodul (14) betriebstechnisch gekoppelt ist, um das entsprechende Zwischenleistungs-Batteriemodul wahlweise zu umgehen, in den Schaltkreis aufzunehmen oder aus dem Schaltkreis zu entfernen,

wobei das Schnellaufladesystem außerdem Folgendes umfasst:

eine Reihenschaltung, die durch eine Reihenanordnung gebildet ist, die wenigstens einen Kommutator (32) und eine Induktivität (40) enthält, die mit der Verbindung mit der elektrischen Versorgungsquelle (2) koppeln und die Ladeeinrichtungen (12) in Reihe schalten; und

eine Reihenschaltung, die aus einer Reihenanordnung gebildet ist, die wenigstens einen Kommutator (34) und eine Induktivität enthält, die mit den Verbindungsanschlüssen (6, 8) koppeln und den Leistungsumsetzer (18) jeder Umsetzerstufe (16) und gegebenenfalls das Zwischenleistungs-Batteriemodul (14) jeder internen Energiespeicherstufe (10) über das entsprechende Kontaktgebermodul (48) in Reihe verbinden.

**13.** Schnellaufladesystem nach Anspruch 8, wobei:

> mehrere interne Energiespeicherstufen (10) Ladeeinrichtungen (12) umfassen, die mit den entsprechenden Zwischenleistungs-Batteriemodulen (14) gekoppelt sind; und
> die Steuereinheit (38) eine Betriebsart besitzt, die eine Ladeleistung jeder Ladeeinrichtung (12) der internen Energiespeicherstufen (10) getrennt moduliert.

**14.** Schnellaufladesystem nach Anspruch 8, wobei:

> die elektrische Versorgungsquelle (20) von einem Stromnetz (2) stammt;

$$m \geq 2;$$

> und
> die Steuereinheit (38) eine Betriebsart besitzt, die jede Ladeeinrichtung (12) der internen Energiespeicherstufen (10) in der Weise steuert, dass einem Stromsollwert des Stromnetzes (2) gefolgt wird.

**15.** Schnellaufladesystem nach Anspruch 14, wobei die Steuereinheit (38) eine Steuerung (94), die einen Übergangsstrom bestimmt, einen Stromregulierer (96), der anhand des Übergangsstroms eine Sollspannung erzeugt, ein Modul (98) zum Diskretisieren der Sollspannung und ein Modul (100) zum Auswählen interner Energiespeicherstufen (10), die einen Beitrag leisten sollen, um Energie zwischen dem Stromnetz (2) und den Zwischenleistungs-Batteriemodulen (14) entsprechend einer Diskretisierung der Sollspannung, die von dem Diskretisierungsmodul (98) geliefert wird, zu übertragen, umfasst.

**16.** Schnellaufladesystem nach Anspruch 8, wobei die elektrische Leistungsvorrichtung (4) eine Leistungsbatterie umfasst, die mit den Verbindungsanschlüssen (6, 8) verbunden ist und durch eine Leerlaufspannung gekennzeichnet ist, die in Bezug auf Spannungsabfälle, die durch interne Impedanzen der Leistungsbatterie bedingt sind, hoch ist.

**17.** Schnellaufladesystem nach Anspruch 1, wobei:

> wenigstens eine der Umsetzerstufen (16) ein Kontaktgebermodul (42) umfasst, das betriebstechnisch verbunden ist, um den entsprechenden Leistungsumsetzer (18) wahlweise zu umgehen, in den Schaltkreis aufzunehmen oder aus dem Schaltkreis zu entfernen.

**18.** Schnellaufladesystem nach Anspruch 1, wobei:

$$n \geq 2;$$

$$n + m \geq 4;$$

und die Umsetzerstufen (16) und die internen Energiespeicherstufen (10) gegebenenfalls in der Weise verteilt sind, dass sie parallel oder in Reihe geschaltete Gruppen bilden und betriebstechnisch zwischen Anordnungen geschaltet sind, die Induktivitäten (40, 28) und Kommutatoren (32, 34) enthalten, die wahlweise betreibbar sind, um die Gruppen von Stufen, die in der Lage sind, Energie mit der elektrischen Leistungsvorrichtung (4) auszutauschen, auszuwählen.

**19.** Schnellaufladesystem nach Anspruch 1, wobei jedes Zwischenleistungs-Batteriemodul (14) eine Anordnung (60) von Elementarzellen enthält, die mit Flyback-Umsetzern (62) gekoppelt sind, die mit einem gemeinsamen Bus (64) verbunden sind, wobei die Flyback-Umsetzer (62) durch eine Steuerung (82) betrieben werden, derart, dass eine Spannung auf dem gemeinsamen Bus (64) gehalten wird und zwischen den Elementarzellen (60) durch Energieübertragung mit dem gemeinsamen Bus (60) ein Gleichgewicht hergestellt wird.

**Claims**

**1.** Multi-stage quick charging system for exchanging energy with an electrical power device (4) that imposes a predetermined voltage at its terminals, the quick charging system comprising:

> terminals (6, 8) for connection with the electrical power device (4);
> a number n of converter stages (16) and a number m of energy internal storage stages (10) connected in series between the terminals (6, 8), with $n \geq 1$, $m \geq 0$ and $n+m \geq 2$, each converter stage (16) having a power converter (18) coupled, on a side of the power converter (18) opposite to a side of the terminals (6, 8), to an arrangement comprising at least one of an intermediate power battery module (14) and a connection (26) to an electrical supply source (20), each energy internal storage stage (10) having an intermediate power battery module (14), at least one intermediate power battery module (14) being present in the multi-stage quick charging system, each intermediate power battery module (14) being **characterized by** a high no-load voltage with respect to voltage drops caused by internal impedances of the intermediate power battery module (14), the intermediate power battery module (14) of each energy internal storage stage (10) and the power converter (18) of each converter stage (16) being connected together in order to be in condition to exchange energy with the electrical power device (4);

a control unit (38) controlling a contribution of each converter stage (16) and, when applicable, of each energy internal storage stage (10) for exchanging energy with the electrical power device (4); and

an inductor (28) connected between one of the terminals (6, 8) and one of the converter stages (16).

2. The quick charging system according to claim 1, wherein:

$$m = 0;$$

and

the arrangement of each converter stage (16) comprises the corresponding intermediate power battery module (14),

the quick charging system further comprising:

a series arrangement formed of the inductor (28) and a switch (34) connected between one of the terminals (6, 8) and one of the stages (16, 10).

3. The quick charging system according to claim 1, wherein:

$$m \geq 1;$$

the arrangement of each converter stage (16) comprises the corresponding intermediate power battery module (14); and

at least one of the energy internal storage stages (10) further has a contactor module (48) operatively coupled to the corresponding intermediary power battery module (14) to selectively bypass, switch on and switch off the corresponding intermediate power battery module (14),

the quick charging system further comprising:

a series arrangement formed of the inductor (28) and a switch (34) connected between one of the terminals (6, 8) and one of the stages (16, 10).

4. The quick charging system according to claim 2, wherein:

the arrangement of several ones of the converter stages (16) further comprises a charger (12) coupled to the corresponding intermediate power battery module (14),

the quick charging system further comprising:

a series loop connecting the chargers (12) in series, the series loop having a series arrangement formed of an inductor (40) and a switch (32).

5. The quick charging system according to claim 1, wherein:

$$m \geq 1;$$

the arrangement of each converter stage (16) comprises the corresponding intermediate power battery module (14), and for at least one of the converter stages (16), a charger (12) coupled to the corresponding intermediate power battery module (14); and

at least one of the energy internal storage stages (10) further has a contactor module (48) operatively coupled to the corresponding intermediate power battery module (14) to selectively bypass, switch on and switch off the corresponding intermediate power battery module (14), and a charger (12) coupled to the corresponding intermediate power battery module (14);

the quick charging system further comprising:

a series loop connecting the chargers (12) in series, the series loop having a series arrangement formed of an inductor (40) and a switch (32); and

a series arrangement formed of the inductor (28) and a switch (34) connected between one of the terminals (6, 8) and one of the stages (16, 10).

6. The quick charging system according to claim 1, wherein:

$$m = 0;$$

and

the arrangement of each converter stage (16) comprises the corresponding intermediate power battery module (14), and for several ones of the converter stages (16), a charger (12) coupled to the corresponding intermediate power battery module (14), the quick charging system further comprising:

a parallel bus (124) connecting the chargers (12) together.

**7.** The quick charging system according to claim 1, wherein:

$$m \geq 1;$$

the arrangement of each converter stage (16) comprises the corresponding intermediate power battery module (14), and for at least one of the converter stages (16), a charger (12) coupled to the corresponding intermediate power battery module (14); and

at least one of the energy internal storage stages (10) further has a charger (12) coupled to the corresponding intermediate power battery module (14), the quick charging system further comprising:

a parallel bus (124) connecting the chargers (12) together.

**8.** The quick charging system according to claim 1, wherein:

$$m \geq 1;$$

the arrangement of at least one of the converter stages (16) comprises the connection (26) to the electrical supply source (20); and

at least one of the energy internal storage stages (10) further has a charger (12) coupled to the corresponding intermediate power battery module (14), the charger (12) connecting to the electrical supply source (2).

**9.** The quick charging system according to claim 1, wherein:

the power converter (18) of each converter stage (16) comprises a voltage source converter.

**10.** The quick charging system according to claim 8, wherein:

the arrangement of at least one of the converter stages (16) comprises the corresponding intermediate power battery module (14) and the connection to the electrical supply source (2, 20), in addition to a charger (12) coupled between the corresponding intermediate power battery module (14) and the connection to the electrical supply source (2, 20).

**11.** The quick charging system according to claim 10, further comprising:

a series loop formed of a series arrangement comprising at least a switch (32) and an inductor (40) coupling to the connection to the electrical supply source (2) and connecting the chargers (12) in series;

a series loop formed of a series arrangement comprising at least a switch (34) and the inductor (28) coupling to the terminals (6, 8) and connecting in series the power converter (18) of each converter stage (16) and the intermediate power battery module (14) of each energy internal storage stage (10); and

when m ≥ 2, between at least two of the energy internal storage stages (10) that follows one another, a switch (36) connected between the corresponding intermediate power battery modules (14).

**12.** The quick charging system according to claim 10, wherein:

at least one of the energy internal storage stages (10) further has a contactor module (48) operatively coupled to the corresponding intermediate power battery module (14) to selectively bypass, switch on and switch off the corresponding intermediate power battery module (14),

the quick charging system further comprising:

a series loop formed of a series arrangement comprising at least a switch (32) and an inductor (40) coupling to the connection to the electrical supply source (2) and connecting the chargers (12) in series; and

a series loop formed of a series arrangement comprising at least a switch (34) and the inductor coupling to the terminals (6, 8) and connecting in series the power converter (18) of each converter stage (16) and the intermediate power battery module (14) of each energy internal storage stage (10) via the corresponding contactor module (48) when applicable.

**13.** The quick charging system according to claim 8, wherein:

several of the energy internal storage stages (10) comprise chargers (12) coupled to the corresponding intermediate power battery modules (14); and

the control unit (38) has an operating mode separately modulating a charging power of each charger (12) of the energy internal storage stages (10).

**14.** The quick charging system according to claim 8, wherein:

the electrical supply source (20) derives from an electrical network (2);

$m \geq 2$; and

the control unit (38) has an operating mode managing each charger (12) of the energy internal storage stages (10) in order to follow a current setting of the electrical network (2).

15. The quick charging system according to claim 14, wherein the control unit (38) comprises a controller (94) determining a current to flow, a current controller (96) producing a voltage target based on the current to flow, a discretization module (98) for discretizing the voltage target, and a selection module (100) for selecting the energy internal storage stages (10) to be put into contribution to transfer energy between the electrical network (2) and the intermediate power battery modules (14) according to a discretization of the voltage target provided by the discretization module (98).

16. The quick charging system according to claim 8, wherein the electrical power device (4) comprises a power battery connecting to the terminals (6, 8) and **characterized by** a high no-load voltage with respect to voltage drops caused by internal impedances of the power battery.

17. The quick charging system according to claim 1, wherein:

at least one of the converter stages (16) comprises a contactor module (42) operatively connected to selectively bypass, switch on and switch off the corresponding power converter (18).

18. The quick charging system according to claim 1, wherein:

$$n \geq 2;$$

$$n + m \geq 4;$$

and

the converter stages (16) and the energy internal storage stages (10) when applicable are distributed in order to form groups connected in parallel or in series and operatively connected between arrangements comprising inductors (40, 28) and switches (32, 34) selectively operable to select the groups of stages in condition to exchange energy with the electrical power device (4).

19. The quick charging system according to claim 1, wherein each intermediate power battery module (14) comprises an arrangement of elementary cells (60) coupled to flyback converters (62) connected to a common bus (64), the flyback converters (62) being operated by a controller (82) in order to maintain a voltage on the common bus (64) and carry out a balancing between the elementary cells (60) by energy transfer with the common bus (60).

22

2

CONVERTISSEUR
PLEIN V ET PLEIN I

24

4

## FIG. 1

(ART ANTÉRIEUR)

22

26

16

28

6

n

20

18

4

2

14

m

12

10

8

## FIG. 2

FIG. 3

FIG. 4

FIG. 5

FIG. 6

**FIG. 7**

**FIG. 8**

FIG. 9A

FIG. 9B

FIG. 10

FIG. 11

FIG. 12

FIG. 13

FIG. 14

120 120 120

o o o

PISTOLET #1    PISTOLET #2    PISTOLET #N

122    122    **FIG. 15**    122

16

28

6

18

**FIG. 16**

n

31    14

m

DISPOSITIF
ÉLECTRIQUE DE
PUISSANCE

4

10

124

8

FIG. 17

FIG. 18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H11113185 B
- JP H05111171 B
- US 2001048606 A
- US 2005017682 A